# EUROPEAN PATENT APPLICATION

(11) **EP 3 078 406 A1**
(43) Date of publication of application: **12.10.2016**
(21) Application number: 15176275.4
(22) Date of filing: 10.07.2015
(51) Int. Cl.: B01D 35/30

(54) **DETACHABLE FILTERING DEVICE**

(30) Priority: 07.04.2015 TW 104205127 U
(71) Applicant: Jetsun Ro Co., Ltd, 42878 Taichung City (TW)
(72) Inventor: Lin, Shuo-Ying, 428 Taichung City (TW); Liao, Hung-Sheng, 428 Taichung City (TW); Chen, Ching-Hsiang, 428 Taichung City (TW)
(74) Representative: Viering, Jentschura & Partner mbB Patent- und Rechtsanwälte

(57) **Abstract**

A datable filtering device (100, 200) includes a barrel (10, 50), a lid (20, 60), and a stopping unit. The lid (20, 60) includes a disk (22, 62) and a tube (24) connected to a bottom of the disk (22, 62). The tube (24) is able to be inserted into the opening of the barrel (10, 50) until the disk (22, 62) abuts against the top of the barrel (10, 50) to seal an opening the barrel (10, 50). The barrel (10, 50) has a first stop block (12), and the tube (24) of the lid (20, 60) has a second stop block (241). The second stop block (241) is moved to a space right under the first stop block (12) when the tube (24) is inserted into the opening of the barrel (10, 50) and the barrel (10, 50) is turned, so that the barrel (10, 50) is unable to be drawn out of the lid (20, 60) directly. The stopping unit is provided on the lid (20, 60) to engage both the lid (20, 60) and the barrel (10, 50) at the same time, so that the barrel (10, 50) is unable to turn related to the lid (20, 60).

## Description

### BACKGROUND OF THE INVENTION

### 1. Technical Field

The present invention relates to a water filtering apparatus, and more particularly to a detachable filtering device.

### 2. Description of Related Art

Recently, the problem of water pollution is getting worse, and therefore water filtering apparatus is widely used at home, restaurant, and industry to filter bad matters, such as heavy metals and chlorine, out of water.

Conventional water filtering apparatus includes several filtering devices in series to filter water. The filtering device basically includes a barrel, a filter cartridge received in the barrel, and a lid sealing the barrel. The user has to remove the barrel from the lid to replace the filter cartridge periodically to keep the quality of filtered water.

In the conventional filtering device, the lid and the barrel are provided with threads for connection and disconnection. Since the water pressure in the barrel is huge when filtering process is proceeding, long threads are provided on the lid and the barrel to ensure the connection. However, long threads make it hard to connect and disconnect the lid and the barrel. Besides, the threads could not make sure that the lid and the barrel would not loose under the high water pressure. In conclusion, the thread is not a good solution for connecting the lid and the barrel of the filtering device.

### BRIEF SUMMARY OF THE INVENTION

In view of the above, the primary objective of the present invention is to provide a detachable filtering device, which provides an easy way to connect and disconnect the lid and the barrel, and also keeps a firm connection of the lid and the barrel under high water pressure.

The present invention provides a datable filtering device, which includes a barrel, a lid, and a stopping unit. The lid includes a disk and a tube connected to a bottom of the disk. The tube is able to be inserted into the opening of the barrel until the disk abuts against the top of the barrel to seal an opening the barrel. The barrel has a first stop block, and the tube of the lid has a second stop block. The second stop block is moved to a space right under the first stop block when the tube is inserted into the opening of the barrel and the barrel is turned, so that the barrel is unable to be drawn out of the lid directly. The stopping unit is provided on the lid to engage both the lid and the barrel at the same time, so that the barrel is unable to turn related to the lid.

With such design, user only has to engage the barrel with the lid, turn the barrel, and move downward the sliding members that would easily connect the barrel to the lid, and the reverse steps may disconnect the barrel. It provides an easier way to connect and disconnect the barrel and the lid than the prior art using the threads, and also it ensure that the water in the barrel would not leak under high water pressure.

### BRIEF DESCRIPTION OF THE SEVERAL VIEWS OF THE DRAWINGS

The present invention will be best understood by referring to the following detailed description of some illustrative embodiments in conjunction with the accompanying drawings, in which
FIG. 1 is a perspective view of a first preferred embodiment of the present invention;
FIG. 2 is an exploded view of the first preferred embodiment of the present invention;
FIG. 3 is another exploded view of the first preferred embodiment of the present invention;
FIG. 4 is a top view of the barrel of the first preferred embodiment of the present invention;
FIG. 5 is a bottom view of the lid of the first preferred embodiment of the present invention;
FIG. 6 is a sketch diagram of the first preferred embodiment of the present invention, showing the lid and the barrel in connection and the first stop block away from the second stop block;
FIG. 7 is a partial perspective view of the first preferred embodiment of the present invention, showing the protrusion of the first stop block engaging the recess of the second stop block;
FIG. 8 is a perspective view of the first preferred embodiment of the present invention, showing the sliding member totally in the second slot;
FIG. 9 is a sectional view along the A-A line of FIG. 8;
FIG. 10 is a sectional view along the B-B line of FIG. 1;
FIG. 11 is an exploded view of the lid and the cover of the first preferred embodiment of the present invention;
FIG. 12 is an exploded view of a second preferred embodiment of the present invention;
FIG. 13 is a perspective view of the second preferred embodiment of the present invention; and
FIG. 14 is a sectional view along the C-C line of FIG. 13.

### DETAILED DESCRIPTION OF THE INVENTION

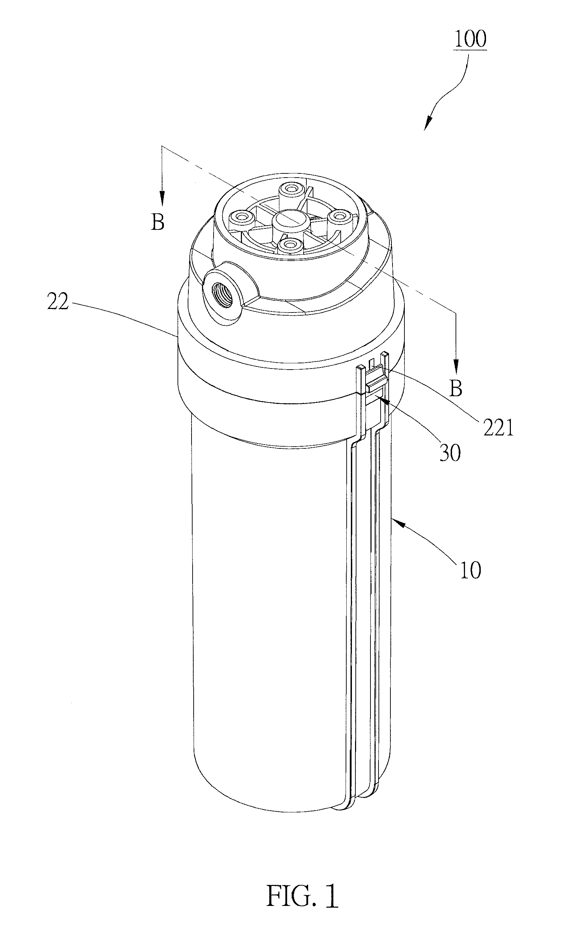

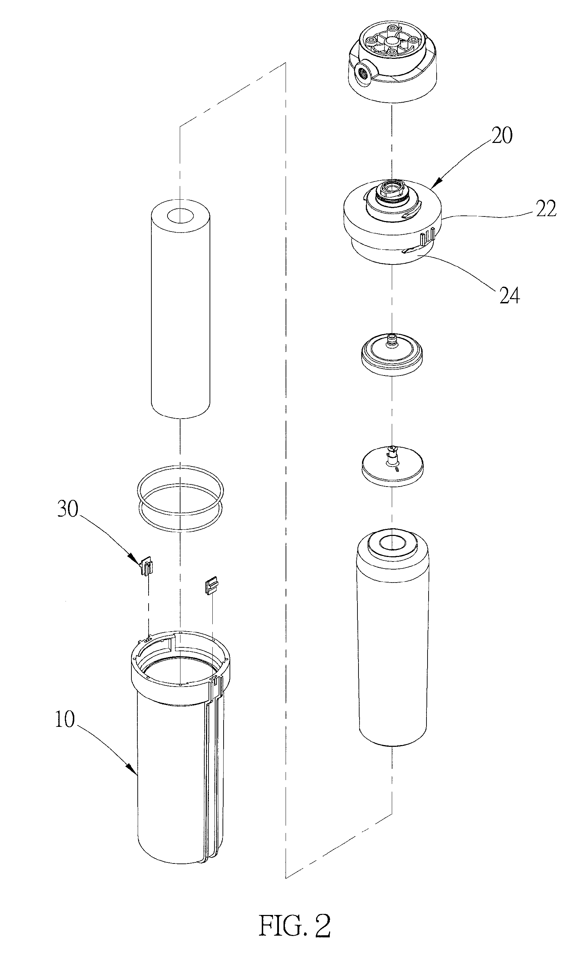

As shown in FIG. 1 to FIG. 3, a filtering device 100 for a water filtering apparatus of the first preferred embodiment of the present invention includes a barrel 10, a lid 20, and a stopping unit, which has two sliding members 30 in the first preferred embodiment.

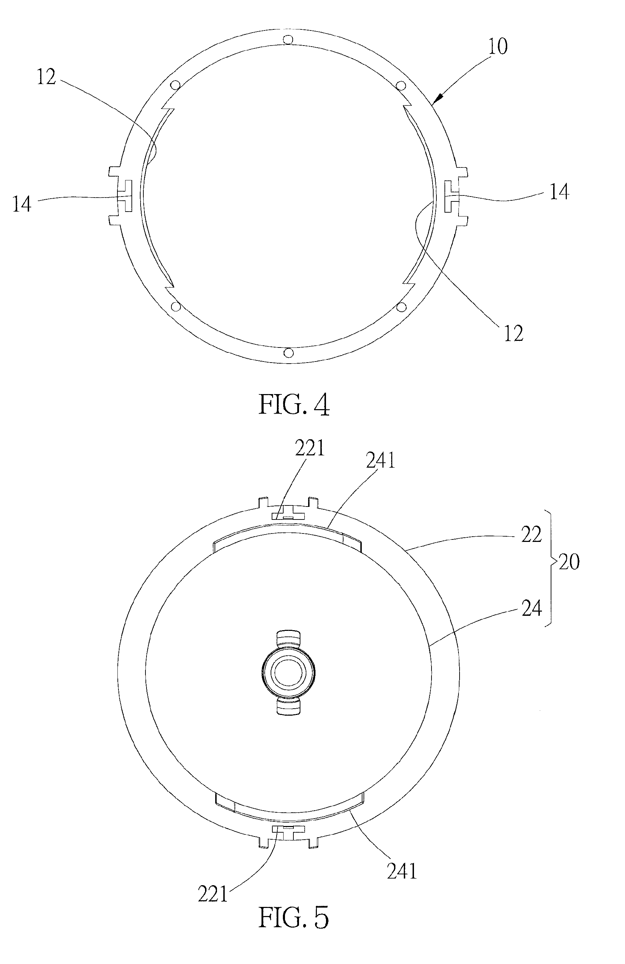

The barrel 10 has an opening at a top thereof, and two first stop blocks 12 on an inner side and closed to the opening. The first stop blocks 12 are opposite related to a center of the barrel 10, and each has a protrusion 121 on a bottom thereof. The barrel 10 further has two first slots 14 on an outer side and closed to the top thereof. Each first slot 14 has a T-shaped cross section (FIG. 4), and is open at both the circumference and the bottom of the barrel 10.

The barrel 10 is detachably connected to the bottom of the lid 20 to seal the opening of the barrel 10. The lid 20 has a disk 22 and a tube 24 connected to a bottom of the disk 22. The tube 24 is inserted into the barrel 10 through the opening, and the disk 22 has the bottom touching the top of the barrel 10 when the barrel 10 is connected to the lid 20. The disk 22 is provided with two second slots 221 on a circumference and closed to the bottom thereof. The same as the first slots 14, each second slot 221 has a T-shaped cross section (FIG. 5), and is open on both the circumference and the bottom of the disk 22. The disk 22 further is provided with a first positioning member 221a and a second positioning portion 221b on a bottom of each second slot 221. Both the first positioning members 221a and the second positioning members 221b are protrusions on the bottom of the second slots 221, and the second positioning member 221b is closer to the bottom of the disk 22 than the corresponding first positioning member 221a, and is higher than the first positioning member 221a. Furthermore, each second positioning member 221b has an inclined face on a top thereof, and the inclined face gradually slopes downwards from an end thereof distal to the bottom of the disk 22 to an end proximal to the bottom. The tube 24 is provided with two second stop blocks 241 on an outer side thereof, and each second stop block 241 has a recess 241a on a top thereof.

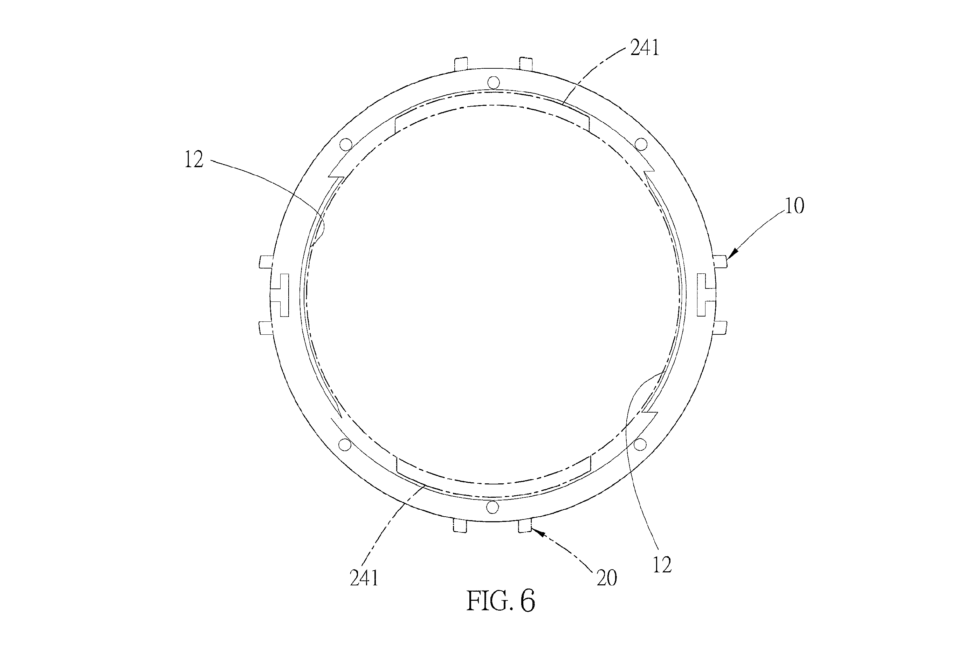

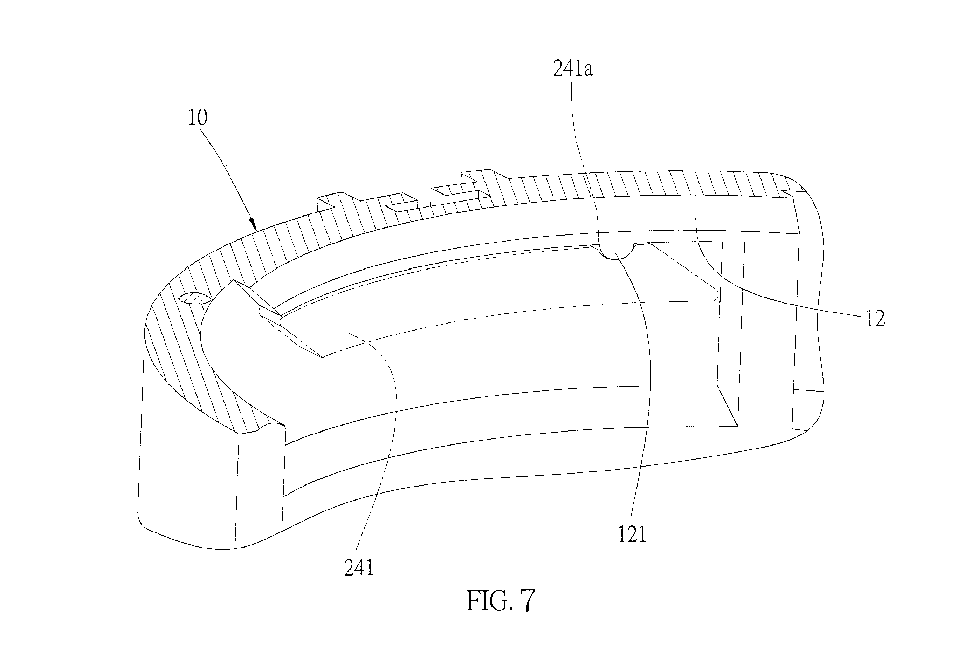

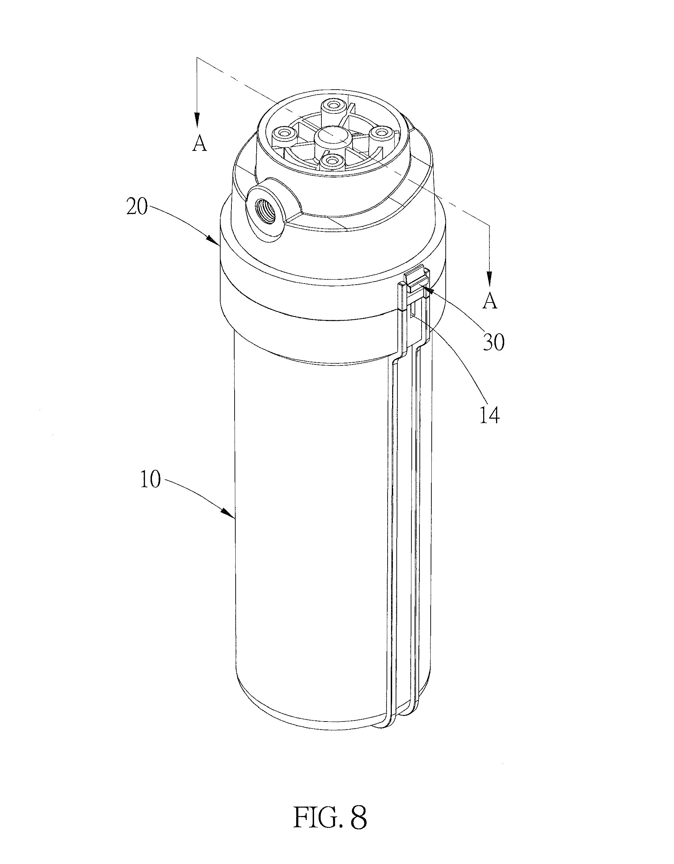

As shown in FIG. 6, to connect the barrel 10 to the lid 20, the barrel 10 is turned to have the first stop blocks 12 off the second stop blocks 241 before inserting the tube 24 into the barrel 10, and then the barrel 10 is turned to the first stop blocks 12 to spaces right above the second stop blocks 241 until the protrusions 121 of the first stop blocks 12 engage the corresponding recesses 241a of the second stop blocks 241 (FIG. 7). As a result, the lid 20 is firmly connected to the barrel 10, and the first slots 14 of the barrel 10 are aligned with the corresponding second slots 221 of the lid 20 (FIG. 8).

The protrusions 121 engage the recesses 241a with a click, which informs the user that the lid 20 and the barrel 10 are firmly connected, and the barrel 10 is unable to be drawn out directly.

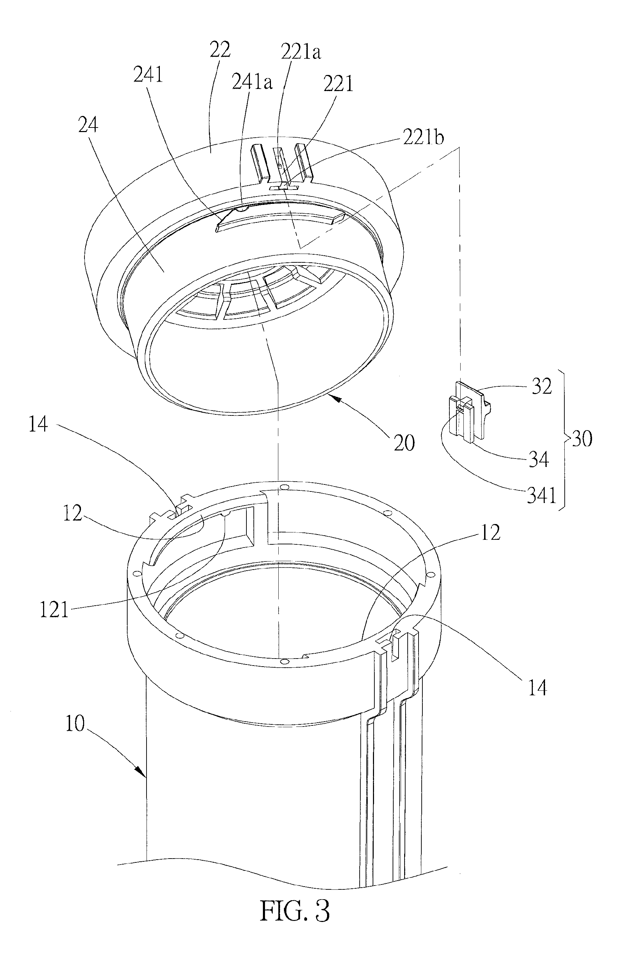

As shown in FIG. 3, each sliding member 30 has a switch 32 and a T-shaped block 34 on a back of the switch 32. The T-shaped blocks 34 respectively enter the second slots 221 of the lid 20 via the openings of the second slots 221 on the bottom of the lid 20, and the switches 32 are left out of the second slots 221 through the openings on the circumference. The T-shaped blocks 34 and the T-shaped second slots 221 make the sliding members 30 remain in the second slots 221 only, and T-shaped blocks 34 could not escape from the second slots 221 via the openings on the circumference of the lid 20 also. Each T-shaped block 34 is provided with a protrusion 341 on a side facing the bottom of the second slot 221.

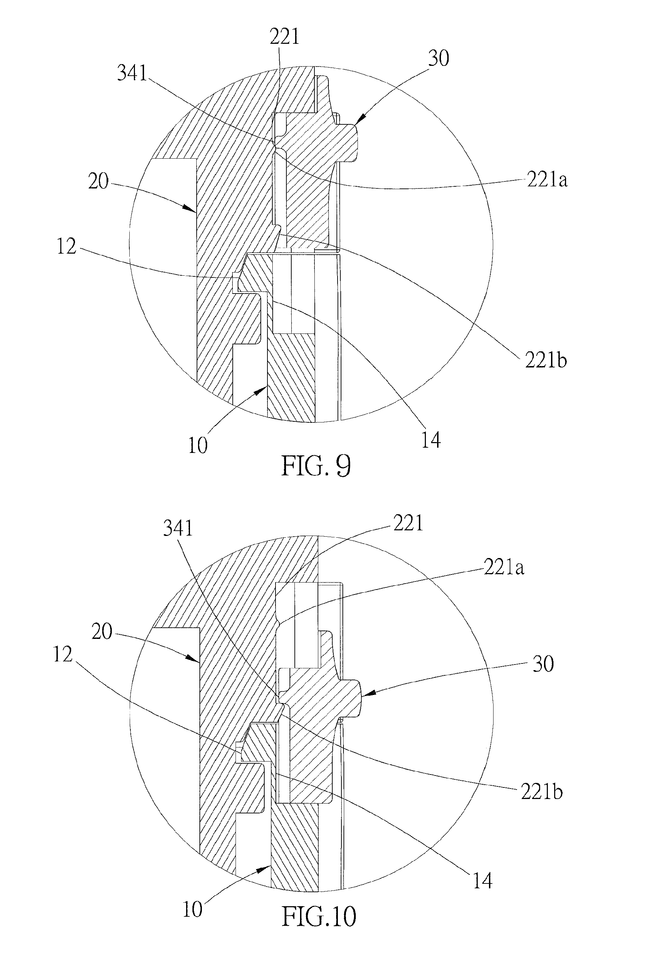

The protrusion 341 crosses the second positioning member 221b (the inclined face on the second positioning member 221b makes it easier) when inserting the T-shaped block 34 into the second slot 221, and the protrusion 341 abuts the second positioning member 221b if the T-shaped block 34 is tended to be moved out. As a result, the sliding members 30 would never escape from the second slots 221. When the sliding member 30 is moved inwards to make the protrusion 341 cross the first positioning member 221a, the entire sliding member 30 is received in the second slot 221, and held therein because of engagement of the protrusion 341 and the first positioning member 221a (FIG. 9). It makes the lid 20 could turn freely when it is connected to the barrel 10.

After the lid 20 is connected to the barrel 10 as described above (shown in FIG. 8 as well), the sliding members 30 are able to move to the corresponding first slots 14 of the barrel 10 after reversely forcing the protrusions 341 crossing the first positioning members 221a. At this time, parts of the T-shaped blocks 34 of the sliding members 30 enter the corresponding first slots 14 via the openings thereof on the top of the barrel 10 (the switches 32 still are left out of the first slots 14 of course) until the protrusions 341 abuts the second positioning member 221b (FIG. 10). At this time, each sliding member 30 is received in both the first and the second slots 14, 221, which makes the barrel 10 unable to turn.

In conclusion, user only has to engage the barrel 10 with the lid 20, turn the barrel 10, and move downward the sliding members 30 that would easily connect the barrel 10 to the lid 20, and the reverse steps may disconnect the barrel 10. It provides an easier way to connect and disconnect the barrel 10 and the lid 20 than the prior art using the threads, and also it ensure that the water in the barrel 10 would not leak under high water pressure.

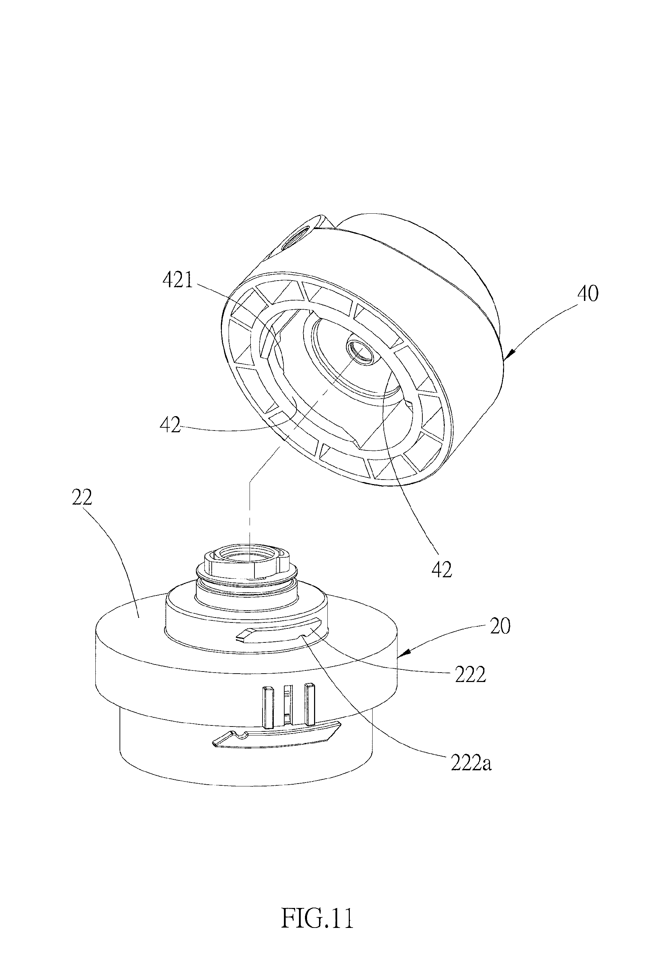

As shown in FIG. 11, the filtering device 100 of the first preferred embodiment further includes a cover 40 connected to a top of the lid 20. The basic function of the cover 40 is taught in Taiwan Utility Model No. M347956, viewers may easily get the detail of the cover in the specification of above Utility Model, so I do not describe the detail here.

However, in the present invention, the cover 40 further has two third stop blocks 42 on an inner side thereof, and each third stop block 42 is provided with a protrusion 421 on a top thereof. Accordingly, the disk 22 of the lid 20 is provided with two fourth stop blocks 222, and each fourth stop block 222 has a recess 222a on a bottom thereof. The same as above, the lid 20 engages the bottom of the cover 40 and turned to move the fourth stop blocks 222 to spaces right above the third stop block 42 of the cover 40 and engage the recesses 222a with the corresponding protrusions 421 with a click. It has the same function as above to firmly connect the cover 40 and the lid 20.

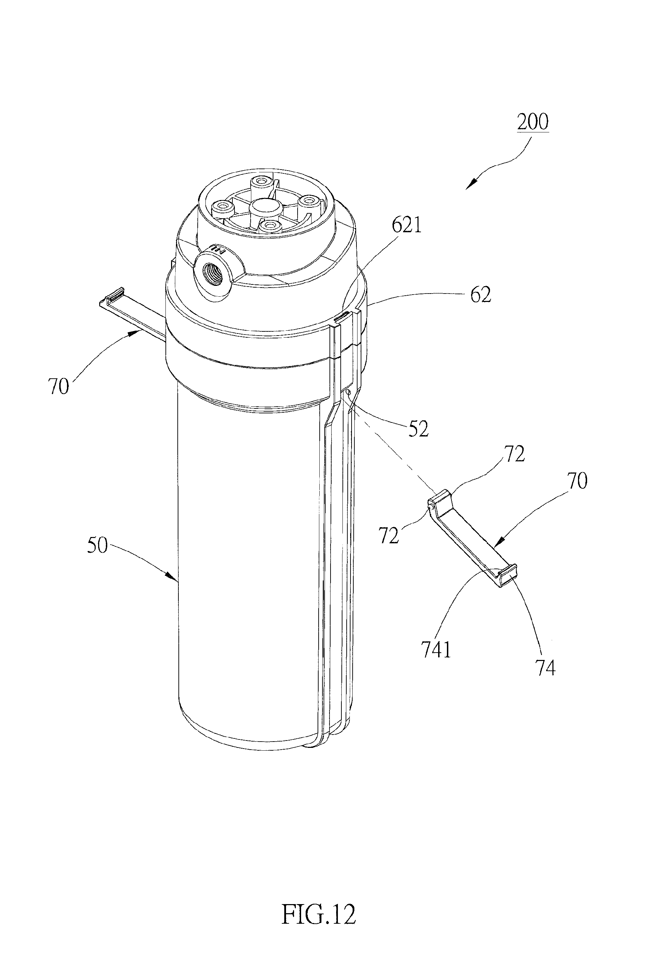

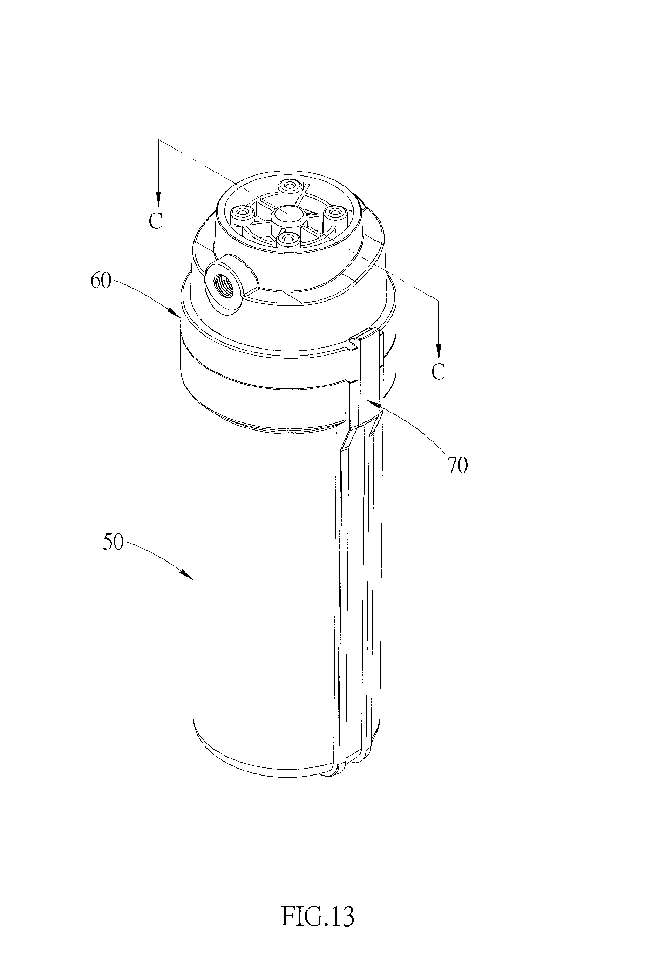

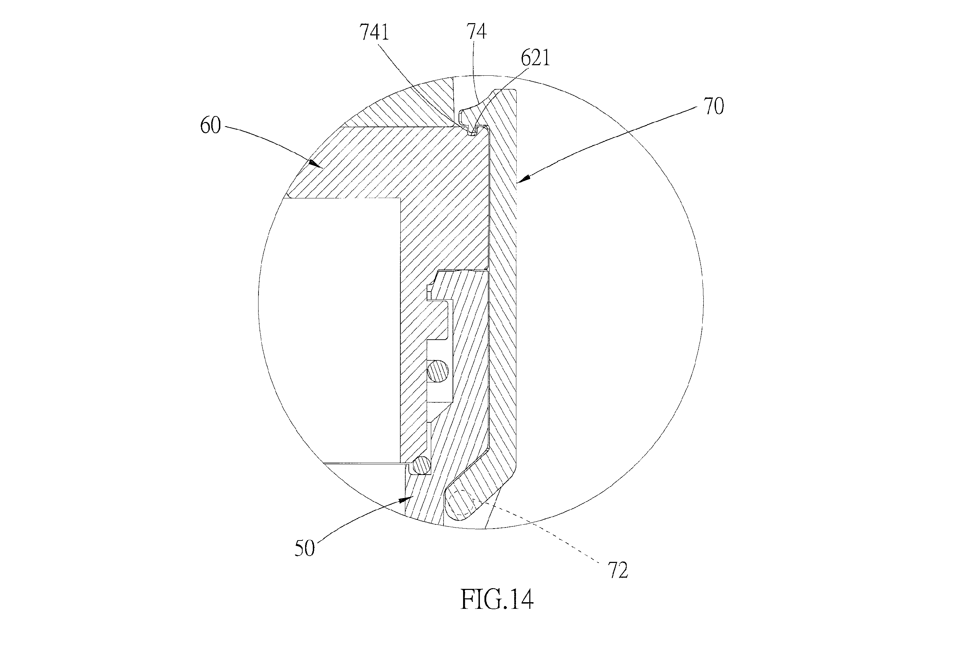

As shown in FIG 12 to FIG. 14, a filtering device 200 of the second preferred embodiment of the present invention, similar to the first preferred embodiment, includes a barrel 50 and a lid 60. The second preferred embodiment provides a stopping unit, which is a locker 70. The structure to connect the barrel 50 to the lid 60 of the second preferred embodiment is the same as that of the first preferred embodiment, so I do not describe again.

The barrel 50 is provided with two pair of pivoting slots 52 on an outer side and closed to a top thereof, and each pair of the pivoting slots 52 are aligned with each other. The lid 60 has a disk 62 with two locking slots 621 on a top thereof and closed to a circumference thereof. Each locker 70 has two rods 72 closed to an end, and a hooking member 74 at the other end. Each hooking member 74 has an engaging portion 741 at a distal end thereof. The rods 72 are inserted into the pivoting slots 52 respectively to pivot the lockers 70 on the barrel 50.

When the barrel 50 is engaged with the lid 70 and turned as described above, the locking slots 621 are right above the locker 70 respectively, so that the lockers 70 could be swung upwards to have the hooking members 74 pressing the top of the disk 62 and the engaging portions 741 engaging the locking slots 621 respectively. As a result, the barrel 50 is unable to turn.

The lid and the barrel of a conventional water filtering apparatus are connected through long threads, and therefore it requires additional tools to exchange the filter cartridge, which is quite inconvenient. In comparison, with the aforementioned design, a filter cartridge received in the barrels 10, 50 provided in the present invention can be easily exchanged by simply moving the sliding member 30 or unlocking the locker 70 without the need of using any tools.

It must be pointed out that the embodiments described above are only some preferred embodiments of the present invention. All equivalent structures which employ the concepts disclosed in this specification and the appended claims should fall within the scope of the present invention.

## Claims

1. A datable filtering device (100, 200), comprising:
a barrel (10, 50) having a first stop block (12) on an inner side and closed to an opening on a top thereof;
a lid (20, 60) detachably connected to the top of the barrel (10, 50) to seal the opening, wherein the lid (20, 60) includes a disk (22, 62) and a tube (24) connected to a bottom of the disk (22, 62); the tube (24) is inserted into the opening of the barrel (10, 50), and the disk (22, 62) abuts against the top of the barrel (20, 60) when the barrel (20, 60) is connected to the lid (20, 60); further wherein the tube (24) has a second stop block (241) on an outer side thereof; the second stop block (241) is moved to a space right under the first stop block (12) when the tube (24) is inserted into the opening of the barrel (10, 50) and the barrel (10, 50) is turned, so that the barrel (10, 50) is unable to be drawn out of the lid (20, 60) directly; and
a stopping unit to be moved to a position to engage both the lid (20, 60) and the barrel (10, 50) at the same time, so that the barrel (10, 50) is unable to turn related to the lid (20, 60), and to another position to engage either the lid (20, 60) or the barrel (10, 50)only, so that the barrel (10, 50) is able to turn related to the lid (20, 60).

2. The datable filtering device (100) of claim 1, wherein the barrel (10) is provided with a first slot (14), and the lid (20) is provided with a second slot (221); the stopping unit includes a sliding member (30) to be moved to be received in both the first slot (14) and the second slot (221) at the same time, and received in either the first slot (14) or the second slot (221) only.

3. The datable filtering device (100) of claim 2, wherein the lid (20) is provided with a first positioning member (221a) and a second positioning member (221b) on a bottom of the second slot (221), and the sliding member (30) is provided with a protrusion (341) facing the bottom of the second slot (221); when the sliding member (30) is moved toward the first positioning member (221a), the entire sliding member (30) is received in the second slot (221), and the protrusion (341) of the sliding member (30) engages the first positioning member (221a) of the lid (20) to hold the sliding member (30) in the second slot (221); when the sliding member (30) is moved toward the second positioning member (221b), the sliding member (30) is received in both the first slot (14) and the second slot (221) at the same time, and the protrusion (341) of the sliding member (30) abuts against the second positioning member (221b).

4. The datable filtering device (100) of claim 3, wherein the first slot (14) and the second slot (221) each has a T-shaped cross section, and the sliding member (30) has a T-shaped block (34) to reciprocate in the first slot (14) and the second slot (221); the protrusion (341) of the sliding member (30) is provided on the T-shaped block (34).

5. The datable filtering device (100) of claim 2, wherein one of the first block (12) of the barrel (10) and the second stop block (241) of the lid (20) is provided with a protrusion (121), and the other one is provided with a recess (241a); when the barrel (10) is turned related to the lid (20) to have the protrusion (121) engaged with the recess (241a), the first slot (14) is aligned with the second slot (221).

6. The datable filtering device (200) of claim 1, wherein the stopping unit includes a locker (70) pivoted on the barrel (50); the locker (70) has a hooking portion (74) at a distal end thereof to press a top of the disk (62) of the lid (60) when the locker (70) is swung toward the lid (60).

7. The datable filtering device (200) of claim 6, wherein the lid (60) is provided with a locking slot (621) on the top of the disk (62), and the hooking portion (74) of the locker (70) is provided with an engaging portion (741) to engage the locking slot (621) of the lid (60) when the locker (70) is swung toward the lid (60).

8. The datable filtering device (200) of claim 7, wherein one of the first block of the barrel (50) and the second stop block of the lid (60) is provided with a protrusion, and the other one is provided with a recess; when the barrel (50) is turned related to the lid (60) to have the protrusion engaged with the recess, the engaging portion (741) of the locker (70) is able to engage the locking slot (621) of the lid (60).

9. The datable filtering device (100, 200) of claim 1, further comprising a cover (40) detachably connected to a top of the lid (20, 60), wherein the cover (40) is provided with a third stop block (42) on an inner side thereof, and the lid (20, 60) is provided with a fourth stop block (222) on an outer side thereof; the third stop block (42) is moved to a space right under the fourth stop block (222) when the lid (20, 60) is engaged with the cover (40) and turned, so that the lid (20, 60) is unable to be drawn out of the cover (40) directly;

10. The datable filtering device (100, 200) of claim 9, wherein one of the third stop block (42) of the cover (40) and the fourth stop block (222) of the lid (20, 60) is provided with a protrusion (421), and the other one is provided with a recess (222a); the protrusion (421) engages the recess (222a) when the lid (20, 60) is turned related to the cover (40).
